(19) Europäisches Patentamt European Patent Office Office européen des brevets

(11) **EP 1 800 151 B1**

(12) **FASCICULE DE BREVET EUROPEEN**

(45) Date de publication et mention de la délivrance du brevet:
**23.03.2011 Bulletin 2011/12**

(21) Numéro de dépôt: **05800565.3**

(22) Date de dépôt: **30.09.2005**

(51) Int Cl.:
***G02B 5/30*** *(2006.01)*

(86) Numéro de dépôt international:
**PCT/FR2005/050800**

(87) Numéro de publication internationale:
**WO 2006/037916 (13.04.2006 Gazette 2006/15)**

(54) **COMPOSITION POUR REVETEMENT SOLIDE POLARISANT LA LUMIERE, VERRE OPTIQUE POLARISANT COMPRENANT UN TEL REVETEMENT, ET SON PROCEDE DE FABRICATION**

LICHTPOLARISIERENDE FESTE BESCHICHTUNGSZUSAMMENSETZUNG, OPTISCHE LINSE DAMIT UND HERSTELLUNGSVERFAHREN DAFÜR

LIGHT-POLARIZING SOLID COATING COMPOSITION, OPTICAL LENS COMPRISING SAME, AND METHOD FOR MAKING SAME

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **04.10.2004 FR 0452248**

(43) Date de publication de la demande:
**27.06.2007 Bulletin 2007/26**

(73) Titulaire: **ESSILOR INTERNATIONAL (Compagnie Générale d'Optique) 94227 Charenton Cédex (FR)**

(72) Inventeurs:
• **BITEAU, John Treasure Island, FL 33706 (US)**
• **FANAYAR, Myriam 44100 Nantes (FR)**

(74) Mandataire: **Catherine, Alain et al Cabinet Harlé & Phélip 7 rue de Madrid 75008 Paris (FR)**

(56) Documents cités:
**WO-A-90/13052 US-A- 1 873 951
US-A- 3 927 930**

EP 1 800 151 B1

**EP 1 800 151 B1**

**Description**

**DOMAINE DE L'INVENTION**

La présente invention se rapporte au domaine des articles d'optique polarisant la lumière, en particulier des verres optiques tels que des verres de lunette, et plus spécifiquement à la mise au point de revêtements solides polarisant la lumière.

**ART ANTERIEUR**

De manière générale, l'obtention d'un verre optique ayant la propriété de polariser la lumière peut être réalisée (i) soit en traitant la masse du verre (substrat), par exemple par dispersion d'un halogénure d'argent dans la masse d'un verre minéral en fusion, soit (ii) en revêtant au moins l'une des surfaces du verre optique, organique ou minéral, avec une couche d'un revêtement polarisant la lumière.

On connaît dans l'art antérieur divers types de couche de revêtement solides pour verre optique utilisés pour polariser la lumière.

On a notamment eu recours à des polymères polarisant la lumière pour la fabrication de filtres polarisants.

Parmi les polymères polarisant la lumière, on a utilisé des polymères de téréphthalate d'alkylène, tels que le polytéréphthalate d'éthylène (PET). Dans certains cas, le film polarisant à base de PET comprend aussi un acide naphthalène dicarboxylique sous forme cristalline ou semi-cristalline, tel que qu'un poly(naphthalate d'éthylène), ou un copolymère dérivé de l'éthylène glycol, de l'acide naphthalène dicarboxylique ou d'autres acides tels que l'acide téréphthalique, comme cela est décrit dans le brevet US 5,882,774.

On a aussi décrit la réalisation de couches de revêtement solide polarisant la lumière comprenant, comme composant polarisant la lumière, des particules ferromagnétiques.

Selon le brevet US 5,943,156, on prépare un gel de monomère comprenant des particules d'un matériau ferromagnétique dont la surface est recouverte d'un film conducteur. Le verre optique est ensuite recouvert, sur au moins l'une de ses surfaces, par le gel de monomère, puis l'ensemble est placé dans un champ magnétique afin d'aligner les particules ferromagnétiques rendues conductrices. Dans une dernière étape, le ou les monomère(s) contenu(s) dans le gel est (sont) durcis, de manière à fixer les alignements des particules ferromagnétiques conductrices dans une masse polymérique. Comme matériau monomère de départ, on utilise un dérivé d'alcoxylé, tels que le tétraéthoxysilane, le méthyltriéthoxysilane, le 3-aminopropyltriéthoxysilane ou encore le trifluoropropyltriméthoxysilane, qui est hydrolysé en solution, par addition d'eau, afin de former le gel. Comme matériau ferromagnétique, on décrit exclusivement des particules de dioxyde de chrome ($CrO_2$) sous forme de paillettes recouvertes d'un film conducteur métallique comme l'or, l'argent, le cuivre, le nickel ou encore l'étain.

La réalisation de films polarisants à base de particules magnétiques est également décrite dans la demande PCT n° WO 90/13052. Selon le procédé de réalisation décrit, les particules magnétiques sont ajoutées à un milieu visqueux contenant un ou plusieurs matériaux pré-polymères ou polymères. Puis, on applique le milieu visqueux sur un support, afin d'en former une couche. L'ensemble est ensuite soumis à un champ magnétique, afin d'aligner les particules magnétiques, avant de procéder à une étape de durcissement des matériaux pré-polymères ou polymères. Parmi les matériaux pré-polymères ou polymères, sont cités les polyuréthanes, les acryliques, les méthacryliques, les polyesters comme les esters de glycol et de phthalate, les nylons®, les polyoléfines ou, plus généralement, les résines thermoplastiques ou thermodurcissantes, en particulier les résines polymères organiques. Selon un mode de réalisation particulier, on utilise, comme particules magnétiques, des particules magnétiques incorporées dans des billes de plastique, par exemple de polystyrène, lesdites billes de plastique comprenant également du noir de carbone ou d'autres pigments. Il est aussi envisagé d'incorporer le matériau magnétique dans des pigments, ou encore de revêtir des particules de magnétite avec des pigments ou avec des matériaux de charge opaques.

Il existe un besoin dans l'état de la technique pour des procédés de fabrication de verres optiques polarisants qui soient plus simples et moins longs à mettre en oeuvre que les procédés connus, et qui mettent en oeuvre des produits de départ faciles à réaliser et peu coûteux.

Il existe également un besoin dans l'état de la technique pour des procédés de ce type qui soient facilement réalisables indifféremment sur des verres optiques organiques et minéraux, sans adaptation substantielle.

Il existe aussi un besoin pour de nouvelles compositions pour revêtement polarisant, destinées à être utilisées dans des procédés améliorés de fabrication de verres optiques polarisants.

**DESCRIPTION DE L'INVENTION**

Selon l'invention, on a mis au point une composition pour revêtement solide polarisant la lumière et un procédé de fabrication d'un verre optique polarisant utilisant ladite composition comme produit de départ.

Le demandeur a montré que, dans la fabrication d'un revêtement solide pour verre optique, les propriétés de polarisation de la lumière sont obtenues lorsqu'on utilise, comme produit de départ, une suspension dans un solvant, préférentiellement aqueux, contenant à la fois des particules d'un matériau magnétique et un ou plusieurs colorants dichroïques, avec ou sans création d'un réseau polymère.

D'une manière surprenante, on a montré selon l'invention que, dans un film liquide d'une suspension aqueuse du type ci-dessus, qui est formé sur un substrat transparent, l'ensemble étant soumis à l'action d'un champ magnétique, on observe un alignement à la fois des particules magnétiques et du/ou des colorants dichroïques. Après séchage du film liquide, on a montré l'obtention d'une couche de revêtement solide sur le substrat transparent qui possède d'excellentes propriétés de polarisation de la lumière.

Ainsi, de manière surprenante, lorsqu'un film d'une suspension aqueuse contenant des particules magnétiques et un ou plusieurs colorants dichroïques est formé à la surface d'un substrat transparent, puis soumis à l'action d'un champ magnétique, l'alignement des particules magnétiques provoque aussi l'alignement des molécules du ou des colorants. De plus, l'alignement de ces deux types de composés est conservé après séchage du film liquide et crée ainsi une couche de revêtement solide à la surface du substrat transparent, ladite couche ayant d'excellentes propriétés de polarisation de la lumière.

Ceci est d'autant plus surprenant que le demandeur a constaté, de manière inattendue, que la formation d'un film liquide et d'une simple suspension aqueuse contenant des particules d'un matériau magnétique, en particulier ferrimagnétique, à la surface d'un substrat optique, puis le séchage dudit film dans un champ magnétique conduisait à l'obtention d'une couche de revêtement dépourvue des propriétés de polarisation de la lumière.

Ainsi, de manière surprenante, on a constaté que, des particules d'un matériau magnétique ne polarisent pas la lumière lorsqu'elles sont incorporées dans une couche de revêtement solide ne comportant aucune matrice orientée, en particulier aucun réseau polymère.

L'invention a donc pour objet une composition pour revêtement solide polarisant la lumière, comprenant, en suspension dans un solvant, (i) des particules d'au moins un matériau magnétique, (ii) au moins un composé colorant dichroïque et optionnellement (iii) au moins un tensioactif.

De préférence, le solvant est l'eau, mieux l'eau désionisée.

Par matériau magnétique, on entend un matériau présentant un moment magnétique préférentiellement permanent, même en l'absence d'un champ magnétique externe.

Les matériaux magnétiques utilisables sont des matériaux ferromagnétiques ou ferrimagnétiques.

Dans le cadre de la présente invention, les particules ferromagnétiques ou ferrimagnétiques peuvent être de tout type connu, couramment utilisé dans l'état de la technique dans des systèmes de polarisation de la lumière.

Les matériaux ferromagnétiques sont généralement des métaux ou des alliages métalliques conducteurs tels que le fer, le cobalt, le nickel, le gadolinium, le dysprosium, et les ferrites divers.

Les matériaux ferrimagnétiques sont généralement des céramiques à base d'oxyde métallique, peu conductrices ou isolantes.

Les particules d'au moins un matériau magnétique utilisées dans une composition selon l'invention sont préférentiellement choisies parmi les particules constituées de $Fe_2O_3$ ou les particules constituées d'un matériau de formule $MO.Fe_2O_3$, dans laquelle M signifie Zn, Cd, Fe, Ni, Cu, Co, Mg, Cr ou Mn.

Les particules de $Fe_2O_3$ sont préférentiellement des particules de $\gamma$-$Fe_2O_3$, encore appelées maghémite.

Les particules peuvent également consister en des particules ferrimagnétiques de formule $MO.Fe_2O_3$, dans laquelle M signifie un métal parmi ceux listés ci-dessus. Elles peuvent être par exemple des particules de $CoFe_2O_4$, comme cela est illustré dans les exemples.

Selon une mode de réalisation avantageux, les particules d'au moins un matériau magnétique se présentent sous la forme d'un ferrofluide. Par « ferrofluide », on entend selon l'invention des particules d'un matériau ferromagnétique ou ferrimagnétique ayant une très faible taille de particule, allant de 0,001 $\mu$m à 0,3 $\mu$m, préférentiellement 0,003 $\mu$m à 0,2 $\mu$m et mieux de 0,005 $\mu$m à 0,1 $\mu$m, qui ont une forme sensiblement sphérique ou allongée, et qui sont en suspension dans un solvant inerte, préférentiellement un milieu aqueux, par exemple de l'eau désionisée. Dans certains modes de réalisation, un ferrofluide selon l'invention consiste en une suspension colloïdale de particules d'un matériau ferrimagnétique. Dans certains modes de réalisation, un ferrofluide selon l'invention peut être enrobé d'une couche d'un ou plusieurs agents tensioactifs dans la solution de suspension des particules.

Par « colorant dichroïque », on entend selon l'invention un colorant qui absorbe la lumière, pour un domaine de longueurs d'onde déterminé, de l'un des deux composants orthogonaux de polarisation et qui transmet l'autre composant orthogonal de polarisation. Un colorant dichroïque possède la propriété de polariser la lumière de manière linéaire. Lorsqu'il est exposé à une source de lumière, par exemple une source de lumière polychromatique, un colorant dichroïque transmet, à la longueur d'onde d'absorption, un rayon lumineux linéairement polarisé, caractérisé en ce que son plan de vibration est déterminé par l'orientation des molécules de ce colorant dans le milieu dans lequel il est contenu.

Préférentiellement, les composés colorants dichroïques compris dans une composition pour revêtement solide selon l'invention sont choisis parmi le sel disodique de l'acide 4-amino-3-((4'-((1-hydroxy-4-sulfo-2-naphthalenyl)azo)-3,3'-dimethoxy(1,1'-biphenyl)-4-yl)azo)-1-naphthalène sulfonique, $C_{32}H_{30}N_5NaO_8S_2$ [Direct Violet 51], le $C_{34}H_{28}N_6O_{16}S_4$.4Na [Chicago Skye Blue 6B], $C_{22}H_{16}N_4O$-4-[4-(phénylazo)-1-naphtylazo]phénol [Disperse Orange 13], TCF® (Thin Crystal Film) d'Optiva et colorant Vari-Light® solution n°2P de Sterling.

Une composition selon l'invention est utilisée en général pour la fabrication d'un verre optique polarisant la lumière, et particulièrement pour la fabrication d'un verre optique teinté, y compris d'un verre optique solaire. Ainsi, le type de colorant dichroïque, et le nombre de colorants dichroïques, compris dans une composition telles que définie ci-dessus varient selon le type d'utilisation recherchée, c'est à dire de teinte finale du verre que l'on cherche à obtenir. On peut noter que la teinte finale du verre optique polarisant qui est fabriqué dépend de l'ensemble des colorants présents dans le verre optique, à savoir les colorants présents dans la couche de revêtement solide polarisant, mais aussi les colorants qui peuvent être incorporés dans la masse du substrat ou encore les colorants qui peuvent être présents dans une ou plusieurs des couches de revêtement fonctionnelles additionnelles, distinctes de la couche de revêtement solide polarisant.

Préférentiellement, une composition pour revêtement solide selon l'invention comprend au moins deux colorants dichroïques distincts, et avantageusement de deux à six, mieux de deux à quatre colorants dichroïques distincts.

Le ou les agent(s) tensioactif(s) présent(s) dans la composition pour revêtement solide selon l'invention permettent une distribution statistique sensiblement homogène des particules magnétiques et du ou des colorants(s), dans tout le volume de la suspension aqueuse, lorsque cette composition est préparée. Lorsque la composition est utilisée sous la forme d'un film sur un substrat de verre optique, dans un champ magnétique, le ou les agent(s) tensioactif(s) favorisent l'obtention d'un bon alignement des particules et du ou des colorant(s) selon la direction du champ magnétique, notamment en réduisant ou en bloquant la formation d'agrégats particulaires dans la suspension. De tels agrégats particulaires doivent être impérativement évités, car de tels agrégats contiendraient nécessairement de nombreuses particules non alignées selon la direction du champ magnétique appliqué, ce qui réduirait considérablement les propriétés de polarisation de la lumière de la couche de revêtement solide finale.

En outre, de tels agrégats, peuvent être amenés à diffuser la lumière. La diffusion de la lumière induit une dépolarisation au moins partielle de la lumière et peut ainsi conduire à diminuer voire annuler l'effet escompté.

Un agent tensioactif utilisé dans une composition pour revêtement solide polarisant selon l'invention peut être tout composé tensioactif connu ou mélange de tels composés, de préférence un composé tensioactif transparent à la lumière et n'induisant pas d'agrégation des autres composés de la solution.

Avantageusement, un composé tensioactif utilisé dans une composition pour revêtement solide polarisant selon l'invention est du type composé tensioactif non ionique (fluoré, siliconé ou simplement hydrocarboné).

Préférentiellement, un composé tensioactif est choisi parmi le EFKA 3034 et le Nonyl Phenol Ethoxylate (NPE).

Des résultats excellents sont obtenus avec le tensioactif NPE.

Les propriétés de polarisation de la lumière les meilleures de la couche de revêtement solide finale sont obtenues avec une composition telle que définie ci-dessus, pour laquelle le rapport en poids des particules ferrimagnétiques (matière solide)/ colorant(s) dichroïque(s) (matière solide) varie de 1/1 à 1/100, mieux de 1/5 à 1/50, ce rapport en poids de matière sèche variant de préférence de 1/7 à 1/33.

Le rapport pondéral est défini selon les nanoparticules magnétiques et les colorants utilisés.

Il est préférentiellement compris entre un rapport minimal et un rapport maximal. Le rapport minimal est le rapport pondéral en deçà duquel trop peu de nanoparticules magnétiques sont présentes dans le film solide final, n'induisant l'alignement que d'une partie seulement des colorants dichroïques présents dans le film, l'alignement n'étant pas optimal.

Le rapport pondéral maximal est le rapport pondéral au delà duquel trop peu de colorants dichroïques sont présents dans le film solide final. Même si tous les colorants présents sont alignés, ils sont trop peu nombreux et l'effet dichroïque du film n'est pas optimal.

Préférentiellement, dans une composition pour revêtement solide polarisant selon l'invention, la quantité de particules d'au moins un matériau magnétique varie de 0,1 à 1% en poids, préférentiellement 0,3 à 0,8% en poids.

De préférence, les particules d'au moins un matériau magnétique consistent en des particules sphériques . On peut également utiliser des particules anisotropes, en particulier des particules enforme d'aiguille, de cylindre.

Les particules magnétiques peuvent être de type coeur (core)/écorce (shell) avec une coeur d'un matériau magnétique et une écorce ou enrobage organique ou hybride organique/inorganique.

En particulier, le matériau d'enrobage peut comprendre un matériau de type alkoxysilane, préférentiellement époxysilane.

Préférentiellement, les particules d'au moins un matériau ferrimagnétique ont une taille moyenne de particule allant de 0,001 $\mu m$ à 0,3 $\mu m$, préférentiellement 0,003 $\mu m$ à 0,2 $\mu m$ et mieux de 0,005 $\mu m$ à 0,1 $\mu m$.

De manière générale, la quantité de colorant(s) dichroïque(s) présente dans une composition pour revêtement solide polarisant selon l'invention peut varier considérablement, selon la teinte finale désirée pour le verre optique. Toutefois, une quantité trop faible de colorant(s) dichroïque(s) doit être évitée, car elle influe négativement sur les propriétés de polarisation de la couche de revêtement solide finale.

Selon un autre mode de réalisation de l'invention, les particules de matériau magnétique peuvent provoquer l'orientation des colorants dichroïques, non pas directement mais par l'intermédiaire d'un composé jouant une action de relais. Dans ce cas, c'est ce composé qui peut être sous forme monomérique, oligomérique ou préférentiellement polymérique qui est orienté par l'action des particules magnétiques. C'est le cas, en particulier, d'un composé de type cristal liquide, dans des systèmes de type « guest host » tels que décrits par exemple dans le brevet US 6245399.

Avantageusement, la quantité du ou des colorant(s) dichroïque(s) varie de 1 à 10%, préférentiellement de 4 à 6% en poids de la composition pour revêtement de l'invention.

La quantité de composé(s) tensioactif(s) présent(s) dans une composition pour revêtement solide selon l'invention varie considérablement, selon le type de composé utilisé et ses propriétés surfactives propres.

Néanmoins, la quantité du ou des composé(s) tensioactif(s) utilisé(s) peut être aisément déterminée par l'homme du métier, selon la nature du ou des composé(s) tensioactif(s) utilisé(s), à l'aide de ses connaissances générales.

Avantageusement, la quantité de composé(s) tensioactif(s) contenu(s) dans une composition pour revêtement solide selon l'invention varie de 0,5 à 2 pour cent en poids, par rapport au poids total de la composition.

Le solvant utilisé pour réaliser la composition pour revêtement polarisant de l'invention est préférentiellement de l'eau, mieux de l'eau désionisée. Ladite solution aqueuse peut aussi comprendre un ou plusieurs solvants incolores et miscibles à l'eau, par exemple un alcool , notamment un alcanol tel que l'éthanol, le méthanol, le propanol ou le butanol.

La composition pour revêtement polarisant de l'invention peut également comprendre un liant oligomèrique ou polymèrique soluble dans le solvant précité et qui durcit pendant ou après l'évaporation du solvant.

Ce liant peut éventuellement comprendre des fonctions réactives, en particulier des fonctions (méth)acrylates, activables sous photoirradiation, qui permettent de réticuler le liant.

Lorsque le solvant est aqueux, on utilise des liants solubles dans l'eau tels que l'alcool polyvinylique (PVA), les polyméthacrylamides.

La composition pour revêtement polarisant peut comprendre des monomères polymérisables, préférentiellement sous photoirradiation. Dans ce cas les compositions pour revêtement polarisant comprennent un amorceur de photopolymérisation.

Ces monomères polymérisables peuvent être utilisés seuls ou en combinaison (mélange) avec le liant précité.

L'invention a aussi pour objet un procédé pour la fabrication d'un verre optique, préférentiellement d'un verre optique, dont au moins l'une des faces est revêtue d'une couche de revêtement solide polarisant la lumière, ledit procédé comprenant les étapes suivantes :

a) former, sur la surface d'un article d'optique nu, ou revêtu d'une ou plusieurs couches de revêtement fonctionnelles, un film liquide d'une composition pour revêtement solide polarisant comprenant des particules magnétiques en suspension dans un solvant ;

b) exposer l'article d'optique revêtu du film liquide de la composition, tel qu'obtenu à la fin de l'étape a), à l'action d'un champ magnétique et

c) procéder au séchage dudit film, et qui se caractérise par le fait qu'au moins un composé dichroïque est présent dans ledit film liquide lors de l'étape a) ou déposé à la surface dudit film après l'étape c).

A l'étape a), le film liquide est obtenu par toute technique connue en soi, notamment dans le domaine de la réalisation de couches de revêtement sur un substrat optique, comme par exemple par trempage ou encore par centrifugation.

De préférence, le film liquide est obtenu, à l'étape a), par dépôt d'une ou plusieurs gouttes de la composition pour revêtement selon l'invention, suivi d'une centrifugation, le film étant formé sous l'effet de la force centrifuge due à la rotation du substrat de l'article d'optique.

Avantageusement, à l'étape a), la vitesse de rotation varie de 500 à 1000 tours par minute, pour une accélération allant de 300 à 5000 tours par minute par seconde (« t/min/s »), l'accélération étant généralement de 5000 t/min/s.

La durée de la centrifugation varie préférentiellement de 10 à 30 secondes.

A l'étape b), l'article d'optique recouvert d'un film de la composition liquide pour revêtement polarisant est placé dans un champ magnétique, la direction du champ magnétique étant parallèle à la surface du substrat à traiter.

Préférentiellement le séchage dudit film de l'étape c) s'effectue au moins partiellement de façon concomitante à l'action dudit champ magnétique, et mieux l'action dudit champ est maintenue durant la totalité du séchage.

De manière générale, le champ magnétique est maintenu le temps nécessaire pour obtenir l'effet de polarisation requis et peut donc varier dans de larges proportions.

Un temps d'une heure est généralement suffisant mais on peut soumettre le film de la composition liquide pendant 24 heures, par exemple.

Lorsqu'on réalise une surface polarisée classique, c'est à dire uniforme sur toute sa surface, le champ magnétique appliqué à l'étape b) est préférentiellement d'orientation et de valeur constante durant toute l'étape.

Préférentiellement encore, on applique un champ magnétique dont la valeur varie de 0,01 à 1 Tesla, de préférence de l'ordre de 0,2 Tesla.

Selon un mode de réalisation avantageux, l'article d'optique à traiter est placé, à l'étape b) du procédé, entre les pôles d'un aimant permanent.

Le procédé de l'invention présente une très grande flexibilité pour réaliser des zones à modulation et/ou variation de polarisation.

On peut par exemple envisager de faire varier la direction de polarisation sur la surface d'un article d'optique sur lequel le film polarisant est déposé, ou bien envisager des zones discontinues de polarisation d'orientations différentes.

Pour cela, on peut soumettre l'article d'optique à un champ magnétique modulé spatialement et/ou dans le temps.

Un autre mode de réalisation consiste à provoquer un séchage plus rapide de certaines zones du film de composition liquide, tout en préservant l'orientation des particules de matériau magnétique et des colorants dichroïques dans cette zone.

Après avoir figé la polarisation desdites zones, on peut modifier l'orientation relative de l'article d'optique supportant le film polarisant et du champ magnétique appliqué afin d'imprimer une polarisation différente au reste de l'article.

Cette étape peut être répétée autant de fois que nécessaire, selon le nombre de zones de polarisations différentes que l'on souhaite réaliser.

Dans un mode de réalisation particulier, le procédé ci-dessus comprend une étape additionnelle d) de fixation de la couche de revêtement solide polarisant la lumière.

Préférentiellement, l'étape d) est réalisée par trempage du verre optique polarisant obtenu à la fin de l'étape c) dans un bain d'agent fixateur.

De préférence, on utilise le $BaCl_2$ comme agent fixateur.

De manière tout à fait préférée, l'étape d) de fixation est réalisée dans un bain de $BaCl_2$ à un pH allant de 3 à 4, mieux à un pH de 3,5, pendant une durée de 5 secondes à 1 minute, mieux de 10 secondes à 40 secondes, et encore mieux de 20 secondes.

Durant l'étape d), l'étape de fixation proprement dite est suivie d'au moins une étape de rinçage, mieux d'au moins trois étapes de rinçage dans de l'eau distillée, suivies d'un séchage, de préférence un séchage à température ambiante, qui peut être d'une durée de 3 à 30 minutes, mieux de 15 minutes.

L'étape de fixation permet la complexation de l'agent fixateur avec des groupes chimiques accessibles du ou des colorant(s) dichroïque(s). Dans le cas du $BaCl_2$, on complexe les ions baryum avec les groupes chimiques anioniques du ou des colorant(s) dichroïques.

Comme déjà mentionné précédemment, le procédé de l'invention est indifféremment appliqué avec un substrat optique en verre minéral ou en verre organique.

Selon une autre caractéristique avantageuse, le procédé ci-dessus peut aussi comprendre, préalablement à l'étape a), une étape de pré-traitement acide ou basique de la surface du verre optique, plus spécifiquement dans le mode de réalisation dans lequel l'étape a) est réalisée avec verre optique nu, ne comprenant aucune couche de revêtement préalable.

Cette étape de pré-traitement de la surface du verre à traiter améliore les conditions d'accrochage de la couche de revêtement solide polarisant sur ladite surface.

Pour traiter la surface d'un verre minéral selon le procédé de l'invention, on procède préférentiellement à une étape de pré-traitement en condition acide, par exemple avec une solution aqueuse d'acide acétique à une concentration allant de 2% à 8%, mieux de 3% à 7%, encore mieux à 5% en poids. L'étape de pré-traitement acide est classiquement réalisée à chaud, à une température comprise entre 40°C et 60°C, la température étant de préférence de 48°C. La durée de l'étape de pré-traitement acide est classiquement de 30 minutes.

Pour traiter la surface d'un verre organique selon le procédé de l'invention, on procède préférentiellement à une étape de pré-traitement en condition basique, par exemple avec une solution aqueuse de soude à une concentration allant de 2% à 8%, mieux de 3% à 7%, encore mieux à 5% en poids. L'étape de pré-traitement basique est classiquement réalisée à chaud, à une température comprise entre 40°C et 60°C, la température étant de préférence de 50°C. La durée de l'étape de pré-traitement basique est classiquement de 4 à 5 minutes, de préférence 4,5 minutes.

On a montré que la couche de revêtement polarisant selon l'invention possédait d'excellentes propriétés de polarisation de la lumière.

En particulier, on a réalisé des mesures de la capacité de la couche de revêtement selon l'invention à polariser la lumière, selon la norme ISO 8980-3. On a ainsi mesuré la transmission de lumière par la couche de revêtement qui est exposée à une source de lumière visible polarisée linéairement, successivement parallèlement et perpendiculairement par rapport au plan de polarisation de ladite couche de revêtement. Les mesures de transmission de la lumière par la couche de revêtement selon l'invention ont été réalisées pour une succession de longueurs d'onde, de 350 nm à 800 nm. Ces mesures ont permis de définir, pour chacune des longueurs d'onde, le rapport de contraste, désigné « CR », qui est calculé selon le rapport « Transmission parallèle »/ « Transmission perpendiculaire ». Pour la succession de longueurs d'onde, on obtient un spectre « CR », qui définit les propriétés de polarisation de la lumière de la couche de revêtement polarisant selon l'invention. En utilisant, comme colorants dichroïques, un mélange de colorants de la société Sterling, on obtient une valeur de CR d'environ 20. En utilisant, comme colorants dichroïques, le colorant de la société Optiva, on obtient une valeur de CR supérieure à 30. De plus, pour une composition de revêtement polarisant selon l'invention donnée, la valeur de CR est très similaire, sinon identique, pour un verre ophtalmique biplan et pour une verre ophtalmique correcteur.

La couche de revêtement solide polarisant peut être déposée directement sur le substrat nu ou sur un substrat déjà revêtu d'une ou plusieurs couches additionnelles fonctionnelles. Egalement, ces couches additionnelles fonctionnelles peuvent être déposées sur la couche de revêtement polarisant selon l'invention.

Selon un premier mode de réalisation particulier, la couche de revêtement solide polarisant selon l'invention est appliquée directement sur le verre nu.

Selon un second mode de réalisation particulier, la couche de revêtement solide polarisant selon l'invention est appliquée sur un verre optique dont la surface est déjà revêtue d'une ou plusieurs couches de revêtement fonctionnelles, parmi les couches de revêtement fonctionnelles classiquement utilisées dans le domaine de l'optique.

Selon un troisième mode de réalisation, dans le verre optique produit final, la couche de revêtement solide polarisant selon l'invention, qui est appliquée indifféremment sur un verre nu ou un verre déjà revêtu d'une ou plusieurs couches de revêtement fonctionnelles, est recouverte d'un ou plusieurs couches de revêtement fonctionnelles additionnelles.

Ainsi, selon encore une autre caractéristique avantageuse, le procédé ci-dessus peut aussi comprendre, après l'étape c), ou après l'étape b) lorsque l'étape c) est omise, une ou plusieurs étapes additionnelles de revêtement de la couche de revêtement solide polarisant par une ou plusieurs couches de revêtement additionnelles.

La ou les couche(s) de revêtement fonctionnelles(s), qui sont constitutives du verre optique produit final, est (sont) généralement choisie(s) parmi les couches de revêtement conventionnelles dans le domaine de l'optique, telles qu'une couche de revêtement anti-réfléchissante, une couche de revêtement anti-abrasion, une couche de revêtement anti-choc, une couche de revêtement photochromique, une couche de revêtement opto-électronique, une couche de revêtement électro-photochromique, une couche de revêtement coloré ou encore une couche de revêtement d'impression tel qu'un logo. La ou les couche(s) de revêtement ci-dessus est (sont) utilisée(s) sous la forme d'un empilement dans lequel est incorporée la couche de revêtement polarisant de l'invention.

Un exemple d'un tel empilement de couches de revêtement est par exemple l'empilement comprenant la succession des couches de revêtement suivantes :

- une couche de revêtement polarisant la lumière, selon l'invention ;
- facultativement, une couche anti-choc, de préférence un latex de polyuréthane ou un latex acrylique (on préfère déposer cette couche anti-choc, en particulier lorsqu'il s'agit d'un latex de polyuréthane, avant le dépôt de la composition pour revêtement solide polarisant la lumière selon l'invention) ;
- une couche de revêtement anti-abrasion ou revêtement dur, qui comprend de préférence un hydrolysat d'un ou plusieurs époxysilane(s) et un ou plusieurs agents de charge minéraux telle que la silice colloïdale ;
- une ou plusieurs couches anti-réfléchissantes, qui comprennent généralement un matériau minéral tel qu'un oxyde métallique ou de la silice ;
- facultativement, une couche hydrophobe anti-salissure, ou « top coat » ; chaque couche de l'empilement ci-dessus étant déposée selon des méthodes connues de l'homme du métier.

En général, l'épaisseur totale de l'empilement des diverses couches de l'anti-reflet (AR), parmi celles indiquées ci-dessus, varie de 80 nm à 800 nm.

L'épaisseur de la couche anti-abrasion varie de préférence de 1 à 10 micromètres, mieux de 2 à 6 micromètres.

L'épaisseur de la couche de primaire anti-choc varie de préférence de 0,5 à 3 micromètres.

L'invention a également pour objet un verre optique polarisant la lumière dont au moins l'une de ses surfaces est recouverte d'une couche d'un revêtement solide polarisant la lumière comprenant l'association (i) de particules d'un matériau magnétique et (ii) d'un composé colorant dichroïque.

Ledit verre optique est préférentiellement obtenu selon le procédé tel que défini ci-dessus dans la présente description.

Selon une autre caractéristique, la couche de revêtement polarisant la lumière est obtenue à partir d'une composition pour revêtement solide polarisant la lumière, telle que définie ci-dessus dans la présente description.

De préférence, le verre optique selon l'invention consiste en une lentille ophtalmique, préférentiellement un verre de lunette.

Préférentiellement, la surface du verre optique qui est recouverte d'une couche de revêtement polarisant selon l'invention est la surface opposée à la surface située du côté de l'oeil.

Préférentiellement, le verre optique comprend au moins une autre couche de revêtement fonctionnelle, choisie parmi les couches de revêtement fonctionnelles décrites ci-dessus, ladite autre couche de revêtement fonctionnelle étant empilée indifféremment au-dessus ou au-dessous de la couche de revêtement polarisant la lumière.

Préférentiellement, la ou les autres couches de revêtement fonctionnelles sont empilées au-dessus de la couche de revêtement polarisant la lumière selon l'invention.

Dans le mode de réalisation dans lequel une seule autre couche de revêtement recouvre la couche de revêtement polarisant selon l'invention, ladite autre couche de revêtement est préférentiellement choisie parmi une couche anti-réfléchissante ou une couche de revêtement anti-abrasion.

Un avantage de l'invention est de pouvoir obtenir un fort effet polarisant pour des couches d'épaisseur faible (typiquement de l'ordre de 2 microns ou moins, lorsque la couche du revêtement polarisant ne contient pas de liant). Il est possible d'ajuster le rapport de contraste en augmentant l'épaisseur de la couche.

La présente invention est en outre illustrée, sans pour autant être limitée, par les figures et les exemples suivants.

## FIGURES

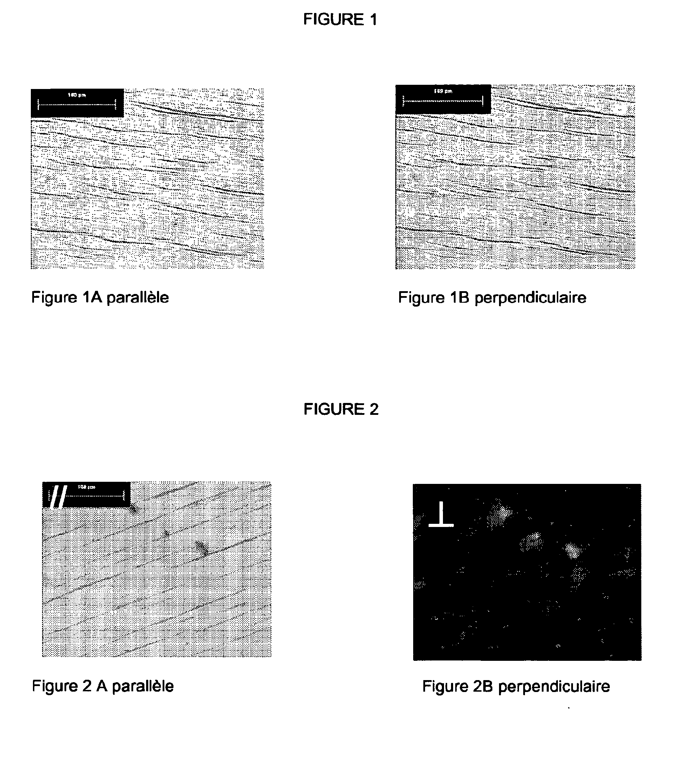

La Figure 1 représente, pour un revêtement comprenant des particules magnétiques (Ferrofluide MT25-31 de Berlin Heart) sans colorant dichoïque, des clichés de microscopie illustrant la transmission d'une source de lumière polarisée, respectivement parallèlement au plan de polarisation attendu (Figure 1A) et perpendiculairement au plan de polarisation attendu (Figure 1 B).

La Figure 2 représente, pour un revêtement comprenant des particules magnétiques (Ferrofluide MT25-31 de Berlin Heart) et un mélange de colorants dichoïques (Vari-Light de Sterling Optics), des clichés de microscopie illustrant la transmission d'une source de lumière polarisée, respectivement parallèlement au plan de polarisation attendu (Figure 2A) et perpendiculairement au plan de polarisation attendu (Figure 2B).

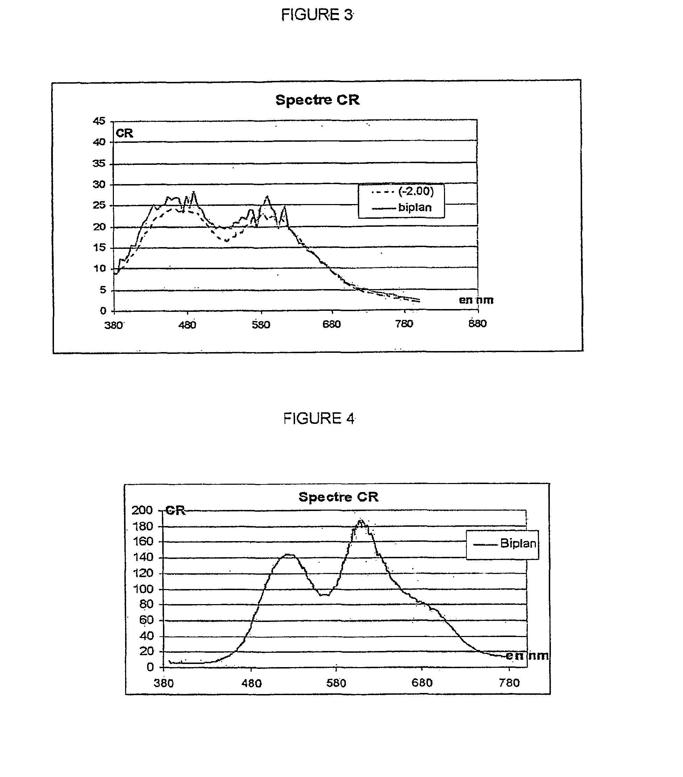

La Figure 3 illustre le spectre des valeurs du rapport de contraste (CR), de 350 nm à 800 nm, pour une couche de revêtement polarisant selon l'invention comprenant des particules d'un matériau magnétique (Ferrofluide MT25-31 de Berlin Heart) et d'un mélange de colorants dichroïques (Vari-Light de la société Sterling). En abscisse, les longueurs d'ondes, exprimées en nanomètres ; en ordonnées, les valeurs du rapport CR.

La Figure 4 illustre le spectre des valeurs du rapport de contraste (CR), de 350 nm à 800 nm, pour une couche de revêtement polarisant selon l'invention comprenant des particules d'un matériau magnétique (Ferrofluide MT25-31 de Berlin Heart) et d'un mélange de colorants dichroïques (TCF de la société Optiva). En abscisse, les longueurs d'ondes, exprimées en nanomètres ; en ordonnées, les valeurs du rapport CR.

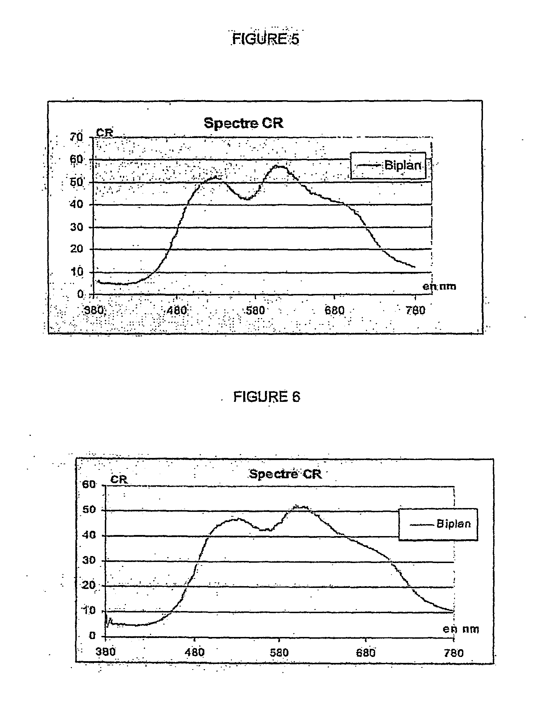

La Figure 5 illustre le spectre des valeurs du rapport de contraste (CR), de 350 nm à 800 nm, pour une couche de revêtement polarisant selon l'invention comprenant des particules d'un matériau magnétique (Ferrofluide EMG 805 de Ferrotec) et d'un mélange de colorants dichroïques (TCF de la société Optiva). En abscisse, les longueurs d'ondes, exprimées en nanomètres ; en ordonnées, les valeurs du rapport CR.

La Figure 6 illustre le spectre des valeurs du rapport de contraste (CR), de 350 nm à 800 nm, pour une couche de revêtement polarisant selon l'invention comprenant des particules d'un matériau magnétique (Ferrofluide EMG 1111 de Ferrotec) et d'un mélange de colorants dichroïques (TCF de la société Optiva). En abscisse, les longueurs d'ondes, exprimées en nanomètres ; en ordonnées, les valeurs du rapport CR.

## EXEMPLES

Dans les exemples, sauf indication contraire, tous les pourcentages et parties sont exprimés en poids.

EXEMPLE 1 : Couche de revêtement comprenant des particules ferrimagnétiques, en l'absence de colorant dichroïque (Exemple comparatif)

Une suspension aqueuse comprenant un ferrofluide de ferrite de cobalt (MT-2531 commercialisé par la société Berlin Heart) a été déposé par « spin coating » sur un substrat consistant en un verre biplan minéral.

Après dépôt, le film est séché pendant 24 heures à température ambiante entre les pôles d'un aimant permanent (entrefer 70mm, champ magnétique de 0,15 Tesla), afin d'obtenir une couche de revêtement solide.

Les propriétés de polarisation ont été recherchées, en utilisant un microscope à filtre polarisant et en orientant la lumière polarisée linéairement, respectivement parallèlement et verticalement, par rapport au plan de polarisation attendu de la couche de revêtement. Les résultats sont représentés sur la figure 1.

Les résultats montrent une transmission totale de la lumière polarisée par la couche de revêtement, que celle-ci soit polarisée linéairement parallèlement (Figure 1A) ou verticalement (Figure 1B) par rapport au plan de polarisation attendu de ladite couche de revêtement.

Ces résultats montrent clairement que les particules ferrimagnétiques, lorsqu'elles sont incorporées dans une couche de revêtement solide, ne polarisent pas la lumière.

EXEMPLE 2 : Couche de revêtement polarisant selon l'invention comprenant un mélange de colorants dichroïques [Vari-Light de la société STERLING]

On a réalisé une composition pour couche de revêtement solide polarisant selon l'invention en préparant un mélange constitué de 0,132g de ferrofluide (MT25-31, commercialisé par la Société Berlin Heart), 6,6 g du mélange de colorants dichroïques (Vari-Light, commercialisé par la société STERLING), et 0,022g de tensioactif (Nonyl Phenol Ethoxylate ou NPE, commercialisé par la Société Sterling Optics).

Le rapport massique ferrofluide (matière solide)/colorant (matière solide) dans la composition pour couche de revêtement solide est de 1/7,5. Pourcentage en masse de matière solide (hors tensio-actif) dans la couche de revêtement solide :

- Colorant : 88,2% ;
- Ferrofluide : 11,8%.

Puis, on a pré-traité la surface de deux verres organiques, respectivement un verre biplan et un verre correcteur « -2,00 dioptries», du type Stigmal commercialisé par la société Essilor International en condition acide, par deux cycles de passage de 30 minutes au total dans les solutions suivantes :

- Solution basique à 48°C ;
- Acide acétique 5% + 0,5% de tensioactifs non ioniques et d'acide toluène sulfonique à 48°C ;
- Eau osmosée à 40°C.

La composition pour couche de revêtement ci-dessus est déposée par centrifugation sur chacun des deux substrats de verre prétraités, à une vitesse de 500 t/min, une accélération de 5000 tours par min/sec, pendant une durée de 30 sec.

Puis, les verres dont une surface est revêtue d'un film liquide de la composition pour couche de revêtement polarisant sont placés entre les deux pôles d'un aimant permanent (entrefer de 70mm) appliquant un champ magnétique de 0,15 Tesla dont l'orientation est parallèle à la surface de l'article à traiter et subissent une étape de séchage, pendant 24 heures à température ambiante.

Les propriétés de polarisation ont été recherchées, en utilisant un microscope à filtre polarisant et en orientant la lumière polarisée linéairement, respectivement parallèlement et verticalement, par rapport au plan de polarisation attendu de la couche de revêtement.

On a observé une extinction de la lumière par la couche de revêtement solide polarisant de l'invention, lorsque la lumière est polarisée perpendiculairement au plan de polarisation attendu, pour le verre biplan et pour le verre correcteur « -2,00 dioptries », comme le montre la Figure 2.

Plus précisément, on a déterminé, pour chacun des deux verres, le spectre CR, par des mesures réalisées conformément à la norme ISO 8980-3.

Le Tableau 1 ci-dessous présente les résultats des mesures de CR, qui sont aussi illustrées sur tout le spectre des longueurs d'onde de 350 nm à 800 nm dans la Figure 3.

Tableau 1 : Mesure du rapport CR

| Echantillon | Tv parallèle (%) | Tv perpendiculaire (%) | CR |
|---|---|---|---|
| Verre (-2,00) | 50,89 | 2,62 | 19,4 |
| Biplan | 52,10 | 2,45 | 21,2 |

Les résultats montrent que la couche de revêtement solide selon l'invention possède d'excellentes propriétés de polarisation de la lumière, dans une gamme étendue de longueurs d'onde.

EXEMPLE 3 : Couche de revêtement polarisant selon l'invention comprenant un mélange de colorants dichroïques de la société Optiva

On a réalisé une composition pour couche de revêtement solide polarisant selon l'invention en préparant un mélange constitué de 0,61g de ferrofluide (MT25-31, commercialisé par la Société Berlin Heart), 15,65g du mélange de colorants dichroïques TCF (Thin Crystal Film) de la société Optiva, et 0,182g de tensioactif (Nonyl Phenol Ethoxylate ou NPE, commercialisé par la Société Sterling Optics Inc.) et 15,67g d'eau distillée.

Le rapport massique ferrofluide (matière solide)/colorant (matière solide) est de 1/7,5. Pourcentage en masse de matière solide (hors tensio-actif) dans l'extrait sec de la composition du revêtement :

- Colorant : 88,2% ;
- Ferrofluide : 11,8%.

Puis, on a pré-traité la surface de verres biplans, du type Orma® d'Essilor International en condition basique, par un cycle de passage de 4,5 minutes dans la solution basique suivante :

- Soude 5% à 50°C ;
- Suivi de rinçage dans des solutions aqueuses.

La composition pour couche de revêtement ci-dessus est déposée par centrifugation sur chacun des deux substrats de verres prétraités, à une vitesse de 500t/min, une accélération de 5000 tours par min/sec, pendant une durée de 10 sec.

Puis, les verres dont une surface est revêtue d'un film liquide de la composition pour couche de revêtement polarisant sont placés entre les deux pôles d'un aimant permanent (entrefer de 70mm et champ magnétique de 0,15 Tesla) dont l'orientation du champ est parallèle et subissent une étape de séchage, pendant 24 heures à température ambiante, sous ledit champ magnétique.

L'Epaisseur de la couche de revêtement polarisant est de 1,10 μm.

On a observé une extinction de la lumière par la couche de revêtement solide polarisant de l'invention lorsque la lumière est polarisée perpendiculairement au plan de polarisation attendu pour les verres biplans.

Plus précisément, on a déterminé, pour chacun des deux verres, le spectre CR, par des mesures réalisées conformément à la norme ISO 89803.

Le tableau 2 ci-dessous présente les résultats des mesures de CR, qui sont aussi illustrées sur tout le spectre des longueurs d'onde de 350 nm à 800 nm dans la Figure 4.

Tableau 2 : Mesure du rapport CR

| Echantillon | Tv parallèle (%) | Tv perpendiculaire (%) | CR |
|---|---|---|---|
| Biplan | 68,19 | 0,66 | 103 |

Les résultats montrent que la couche de revêtement solide selon l'invention possède d'excellentes propriétés de polarisation de la lumière, dans une gamme étendue de longueurs d'onde.

EXEMPLE 4 : Ferrofluide EMG 805/Colorants Optiva

On a réalisé une composition pour couche de revêtement solide polarisant selon l'invention en préparant un mélange constitué de 0,13g de ferrofluide (EMG 805, commercialisé par la Société Ferrotec), 3,40g du mélange de colorants dichroïques TCF (Thin Crystal Film) de la société Optiva, et 0,037g de tensioactif (Nonyl Phenol Ethoxylate ou NPE, commercialisé par la Société Sterling Optics Inc. et 3,41g d'eau distillée.

Le rapport massique ferrofluide (matière solide)/colorant (matière solide) est de 1/32. Pourcentage en masse de matière solide (hors tensio-actif) dans l'extrait sec de la composition de revêtement :

- Colorant : 97% ;
- Ferrofluide : 3%.

Puis, on a pré-traité la surface de verres biplans, du type Orma® d'Essilor International en condition basique, par un cycle de passage de 4,5 minutes dans la solution basique suivante :

- Soude 5% à 50°C ;
- Suivi du rinçage dans des solutions aqueuses.

La composition pour couche de revêtement ci-dessus est déposée par centrifugation sur chacun des deux substrats de verres prétraités, à une vitesse de 500t/min, une accélération de 5000 tours par min/sec, pendant une durée de 10 sec.

Puis, les verres dont une surface est revêtue d'un film liquide de la composition pour couche de revêtement polarisant sont placés entre les deux pôles d'un aimant permanent (entrefer de 70mm et champ magnétique de 0,15 Tesla) dont l'orientation du champ est parallèle et subissent une étape de séchage, pendant 24 heures à température ambiante, sous ledit champ magnétique.

L'épaisseur de la couche de revêtement polarisant est de 0,89 $\mu$m.

On a observé une extinction de la lumière par la couche de revêtement solide polarisant de l'invention, lorsque la lumière est polarisée perpendiculairement au plan de polarisation attendu pour les verres biplans.

Plus précisément, on a déterminé, pour chacun des deux verres, le spectre CR, par des mesures réalisées conformément à la norme ISO 89803.

Le tableau 3 ci-dessous présente les résultats des mesures de CR, qui sont aussi illustrées sur tout le spectre des longueurs d'onde de 350 nm à 800 nm dans la Figure 5.

Tableau 3 : Mesure du rapport CR

| Echantillon | Tv parallèle (%) | Tv perpendiculaire (%) | CR |
|---|---|---|---|
| Biplan | 70,42 | 1,59 | 44 |

Les résultats montrent que la couche de revêtement solide selon l'invention possède d'excellentes propriétés de polarisation de la lumière, dans une gamme étendue de longueurs d'onde.

EXEMPLE 5 : Ferrofluide EMG 1111/Colorants Optiva

On a réalisé une composition pour couche de revêtement solide polarisant selon l'invention en préparant un mélange constitué de 0,21 g de ferrofluide (EMG 1111, commercialisé par la Société Ferrotec), 5,22g du mélange de colorants dichroïques TCF (Thin Crystal Film) de la société Optiva, et 0,060g de tensioactif (Nonyl Phenol Ethoxylate ou NPE, commercialisé par la Société Sterling Optics Inc.) et 5,22g d'eau distillée.

Le rapport massique ferrofluide (matière solide)/colorant (matière solide) est de 1/12. Pourcentage en masse de matière solide (hors tensio- actif) dans l'extrait sec de la composition de revêtement :

- Colorant : 92,5% ;
- Ferrofluide : 7,5%.

Puis, on a pré-traité la surface de verres biplans, du type Orma® d'Essilor International en condition basique, par un cycle de passage de 4,5 minutes dans la solution acide suivante :

- Soude 5% à 50°C ;
- Nettoyage à l'eau.

La composition pour couche de revêtement ci-dessus est déposée par centrifugation sur chacun des deux substrats de verres prétraités, à une vitesse de 500t/min, une accélération de 5000 tours par min/sec, pendant une durée de 10 sec.

Puis, les verres dont une surface est revêtue d'un film liquide de la composition pour couche de revêtement polarisant sont placés entre les deux pôles d'un aimant permanent (entrefer de 70mm et champ magnétique de 0,15 Tesla) dont l'orientation du champ est parallèle et subissent une étape de séchage, pendant 24 heures à température ambiante, sous ledit champ magnétique.

L'épaisseur de la couche de revêtement polarisant est de 0,72 $\mu$m.

On a observé une extinction de la lumière par la couche de revêtement solide polarisant de l'invention, lorsque la lumière est polarisée perpendiculairement au plan de polarisation attendu pour les verres biplans.

Plus précisément, on a déterminé, pour chacun des deux verres, le spectre CR, par des mesures réalisées conformément à la norme ISO 89803.

Le tableau 4 ci-dessous présente les résultats des mesures de CR, qui sont aussi illustrées sur tout le spectre des longueurs d'onde de 350 nm à 800 nm dans la Figure 6.

Tableau 4: Mesure du rapport CR

| Echantillon | Tv parallèle (%) | Tv perpendiculaire (%) | CR |
|---|---|---|---|
| Biplan | 73,11 | 1,75 | 42 |

Les résultats montrent que la couche de revêtement solide selon l'invention possède d'excellentes propriétés de polarisation de la lumière, dans une gamme étendue de longueurs d'onde.

EXEMPLE 6 : Couche de revêtement polarisant selon l'invention comprenant un mélange de colorants dichroïques de la société Optiva et un liant.

On a réalisé une composition pour couche de revêtement solide polarisant selon l'invention en préparant un mélange constitué de ferrofluide (MT25-31, commercialisé par la Société Berlin Heart), du mélange de colorants dichroïques TCF (Thin Crystal Film) de la société Optiva, de tensioactif (Nonyl Phenol Ethoxylate ou NPE, commercialisé par la Société Sterling Optics Inc.), d'un liant polymérique PVA (alcool polyvinylique) et d'eau distillée en procédant de la façon suivante :

On introduit dans un flacon en verre 4g de PVA + 40g d'eau distillée. Le mélange est chauffé à 80°C pendant 3 heures afin de dissoudre complètement le PVA dans l'eau.

On prépare un mélange en additionnant 10g de solution PVA/eau, 0,096g de MT25-31, 2,38g de colorant TCF d'Optiva et 0,066g de NPE.

Puis, on a pré-traité la surface de verres biplans, du type Orma® d'Essilor International par trempage dans un bain de soude 5% à 50°C, puis rinçage dans des bains d'eau.

La composition pour couche de revêtement ci-dessus est déposée par centrifugation sur le substrat prétraité, à une vitesse de 500t/min, une accélération de 5000 tours par min/sec, pendant une durée de 10 sec.

Après dépôt de la solution, le verre dont une surface est revêtue d'un film liquide de la composition pour couche de revêtement polarisant est placé dans l'aimant permanent, dans les conditions de l'exemple 2 et séché pendant 24 heures dans l'aimant à température ambiante.

Les résultats obtenus suivant le protocole de l'exemple 2 sont récapitulés dans le tableau 5 ci-dessous.

Tableau 5: Mesure du rapport CR

| Echantillon | Tv parallèle (%) | Tv perpendiculaire (%) | CR |
|---|---|---|---|
| Biplan | 45,61 | 9,23 | 4,94 |

$$CR = T_{vparallèle} / T_{vperpendiculaire}.$$

On constate un effet polarisant.

EXEMPLE 7 : Couche de revêtement polarisant selon l'invention comprenant un mélange de colorants dichroïques de la société Optiva.

Dans cet exemple, on a réalisé une composition pour couche de revêtement solide polarisant selon l'invention en déposant ladite couche sur une couche initiale de PVA/ferrofluide soumise auparavant à un champ magnétique.

On prépare un mélange constitué de ferrofluide (MT25-31, commercialisé par la Société Berlin Heart), de PVA et d'eau en procédant de la façon suivante :

On introduit dans un flacon en verre 4g de PVA + 40g d'eau distillée. Le mélange est chauffé à 80°C pendant 3 heures afin de dissoudre complètement le PVA dans l'eau, puis on laisse refroidir pendant environ 30 minutes la solution de PVA.

On prépare un mélange en ajoutant 15,03g de solution PVA/eau à 0,0157g de MT25-31.

Puis, on a pré-traité la surface d'un verre organique Orma® d'Essilor International (puissance -2,00 dioptries) par trempage dans un bain de soude 5% à 50°C, puis rinçage dans des bains d'eau.

La composition pour couche de revêtement ci-dessus est déposée par centrifugation sur le substrat prétraité, à une vitesse de 500t/min, une accélération de 5000 tours par min/sec, pendant une durée de 10 sec.

Après dépôt de la solution, le verre est placé dans l'aimant permanent, dans les conditions de l'exemple 2 et séché pendant 24 heures dans l'aimant à température ambiante et on obtient une couche de PVA/ferrofluide solide.

On prépare alors une solution de colorant en mélangeant 4g de colorants Optiva TCF avec 4g d'eau distillée et 0,048g de NPE.

Cette solution est déposée sur la couche solide de PVA/ferrofluide par centrifugation (spin coating) à une vitesse de 1000t/min, une accélération de 5000 tours par min/sec, pendant une durée de 10 sec.

Le verre est ensuite séché pendant 24 heures à température ambiante.

On mesure les propriétés de polarisation du verre final obtenu de la même façon que dans l'exemple 2.

Les résultats sont mentionnés dans le tableau 6 ci-dessous.

Tableau 6: Mesure du rapport CR

| Echantillon | Tv parallèle (%) | Tv perpendiculaire (%) | CR |
|---|---|---|---|
| -2,00 dioptries | 64,43 | 1,52 | 42,4 |

$$CR = T_{vparallèle}/T_{vperpendiculaire}.$$

**Revendications**

1. Composition pour revêtement solide polarisant la lumière, comprenant, en suspension dans un solvant, (i) des particules d'au moins un matériau magnétique, **caractérisée en ce qu'**elle comprend (ii) au moins un composé colorant dichroïque.

2. Composition selon la revendication 1, **caractérisée en ce que** le solvant est une solution aqueuse.

3. Composition selon la revendication 1 ou 2, **caractérisée en ce qu'**elle comprend au moins un agent tensioactif.

4. Composition selon l'une quelconque des revendications précédentes, **caractérisée en ce que** le matériau magnétique est un matériau ferromagnétique ou ferrimagnétique.

5. Composition selon la revendication 1, **caractérisée en ce que** les particules de matériau ferrimagnétique sont choisies parmi les particules constituées de $Fe_2O_3$ ou les particules constituées d'un matériau de formule $MO.Fe_2O_3$, dans laquelle M signifie Zn, Cd, Fe, Ni, Cu, Co, Mg, Cr et Mn.

6. Composition selon l'une quelconque des revendications précédentes, **caractérisée en ce que** le ou les composé (s) colorant(s) dichroïque(s) est (sont) choisi(s) parmi le sel disodique de l'acide 4-amino-3-((4'-((1-hydroxy-4-sulfo-2-naphthalenyl)azo)-3,3'-dimethoxy(1,1'-biphenyl)-4-yl)azo)-1-naphthalène sulfonique, $C_{32}H_{30}N_5NaO_8S_2$ [Direct Violet 51], le $C_{34}H_{28}N_6O_{16}S_4.4Na$ [Chicago Skye Blue 6B], $C_{22}H_{16}N_4O$-4-[4-(phénylazo)-1-naphtylazo]phénol [Disperse Orange 13].

7. Composition selon l'une quelconque des revendications précédentes, **caractérisée en ce qu'**elle comprend de 2 à 4 composés colorants dichroïques distincts.

8. Composition selon l'une des revendications 3 à 7, **caractérisée en ce que** le ou les composé(s) tensioactif(s) est (sont) choisi(s) parmi le EFKA 3034 et le Nonyl Phénol Ethoxylate (NPE).

9. Composition selon l'une quelconque des revendications précédentes, **caractérisée en ce que** le rapport pondéral, en matière sèche, particules magnétiques/colorant(s) dichroïque(s) va de 1/1 à 1/100, de préférence 1/5 à 1/50 et mieux de 1/7 à 1/33.

**10.** Composition selon l'une quelconque des revendications précédentes, **caractérisée en ce que** la quantité de particules d'au moins un matériau magnétiques varie de 0,1 à 1%, préférentiellement de 0,3 à 0,8% par rapport au poids de la composition.

**11.** Composition selon l'une quelconque des revendications précédentes, **caractérisée en ce que** les particules d'au moins un matériau magnétique consistent en des particules sphériques.

**12.** Composition selon l'une quelconque des revendications précédentes, **caractérisée en ce que** les particules d'au moins un matériau magnétique ont une taille moyenne de particule allant de 0,001 $\mu$m à 0,3 $\mu$m, préférentiellement de 0,003 $\mu$m à 0,2 $\mu$m, au mieux de 0,005 $\mu$m à 0,1 $\mu$m.

**13.** Composition selon l'une quelconque des revendications précédentes, **caractérisée en ce que** la quantité du ou des colorant(s) dichroïque(s) varie de 1 à 10%, préférentiellement de 4 à 6 en poids de la composition.

**14.** Composition selon l'une quelconque des revendications 3 à 13, **caractérisée en ce que** le ou les composé(s) tensioactif(s) sont présents à raison de 0,5 à 2% en poids, par rapport au poids total de la composition.

**15.** Composition selon l'une quelconque des revendications précédentes, **caractérisée en ce qu'**elle comprend au moins un liant oligomèrique ou polymèrique.

**16.** Composition selon la revendication 15, **caractérisée en ce que** le liant est l'alcool polyvinylique.

**17.** Composition selon l'une quelconque des revendications 1 à 14, **caractérisée en ce qu'**elle comprend un composé relais sous forme monomèrique, oligomèrique ou polymèrique, pour provoquer l'orientation des colorants dichoïques.

**18.** Composition selon la revendication 17, **caractérisée en ce que** le composé relais est un cristal liquide.

**19.** Procédé pour la fabrication d'un article d'optique dont au moins l'une des faces est revêtue d'une couche de revêtement solide polarisant la lumière, ledit procédé comprenant les étapes suivantes :

a) former un film liquide d'une composition pour revêtement solide polarisant comprenant des particules magnétiques en suspension dans un solvant sur la surface d'un article d'optique nu, ou revêtu d'une ou plusieurs couches de revêtement fonctionnelles ;
b) exposer l'article d'optique revêtu du film liquide de la composition, tel qu'obtenu à la fin de l'étape a), à l'action d'un champ magnétique, et
c) procéder au séchage dudit film,

**caractérisé en ce qu'**au moins un composé colorant dichroïque est présent dans de ledit film liquide lors de l'étape a) ou déposé à la surface dudit film après l'étape c), préférentiellement présent dans ledit film lors de l'étape a).

**20.** Procédé selon la revendication 19, **caractérisé en ce que** le séchage dudit film de l'étape c) s'effectue au moins partiellement de façon concomitante à l'action dudit champ magnétique.

**21.** Procédé selon la revendication 19 ou 20, **caractérisé en ce qu'**il comprend une étape additionnelle d) de fixation de la couche de revêtement solide polarisant la lumière.

**22.** Procédé selon l'une des revendications 19 à 21, **caractérisé en ce qu'**il comprend, préalablement à l'étape a), une étape de pré-traitement acide ou basique de la surface du verre optique.

**23.** Procédé selon l'une quelconque des revendications 19 à 22, **caractérisé en ce qu'**il comprend, après l'étape d), ou après l'étape c) lorsque l'étape d) est omise, une ou plusieurs étapes additionnelles de revêtement de la couche de revêtement solide polarisant par une ou plusieurs couches de revêtement additionnelles.

**24.** Article d'optique polarisant la lumière dont au moins l'une de ses surfaces est recouverte d'une couche d'un revêtement solide polarisant la lumière comprenant l'association (i) de particules d'un matériau magnétique et (ii) d'un composé colorant dichroïque.

**25.** Article d'optique polarisant selon la revendication 24, **caractérisé en ce que** la couche de revêtement solide polarisant est obtenue à partir d'une composition selon l'une quelconque des revendications 1 à 18.

**Claims**

1. A light-polarizing, solid coating composition, comprising suspended in a solvent (i) particles from at least one magnetic material, **characterized in that** it comprises (ii) at least one dichroic dye compound.

2. A composition according to claim 1, **characterized in that** the solvent is an aqueous solution,

3. A composition according to claim 1 or 2, **characterized in that** it comprises at least one surfactant.

4. A composition according to any of preceding claims, **characterized in that** the magnetic material is a ferromagnetic material or a ferrimagnetic material.

5. A composition according to claim 1, **characterized in that** the ferrimagnetic material particles are selected from particles consisting of $Fe_2O_3$ or from particles consisting of a material of formula $MO.Fe_2O_3$, wherein M does represent Zn, Cd, Fe, Ni, Cu, Co, Mg, Cr or Mn.

6. A composition according to any of preceding claims, **characterized in that** the dichroic dye compound(s) is or are selected from 4-amino-3-((4'-((1-hydroxy-4-sulfo-2-naphthalenyl)azo)-3,3'-dimethoxy(1,1'-biphenyl)-4-yl)azo)-1-naphthalene sulfonic acid disodium salt, $C_{32}H_{30}N_5NaO_8S_2$ [Direct Violet 51], $C_{34}H_{28}N_6O_{16}S_4 \cdot 4Na$ [Chicago Skye Blue 6B], $C_{22}H_{16}N_4O$-4-[4-(phenylazo)-1-naphthylazo]phenol [Disperse Orange 13].

7. A composition according to any of preceding claims, **characterized in that** it comprises from 2 to 4 distinct dichroic dye compounds.

8. A composition according to any of the claims 3 to 7, **characterized in that** the surfactant compound(s) is or are selected from EFKA 3034 and nonylphenol ethoxylate (NPE).

9. A composition according to any of preceding claims, **characterized in that** the weight ratio in dry matter of magnetic particles to dichroic dye(s) does range from 1:1 to 1:100, preferably from 1:5 to 1:50 and more preferably from 1:7 to 1:33.

10. A composition according to any of preceding claims, **characterized in that** the amount of particles from at least one magnetic material does vary from 0.1 to 1%, preferably from 0.3 to 0.8% as related to the weight of the composition.

11. A composition according to any of preceding claims, **characterized in that** the particles from at least one magnetic material are spherical particles.

12. A composition according to any of preceding claims, **characterized in that** the particles from at least one magnetic material have a mean particle size ranging from 0.001 $\mu$m to 0.3 $\mu$m, preferably from 0.003 $\mu$m to 0.2 $\mu$m, and most preferably from 0.005 $\mu$m to 0.1 $\mu$m.

13. A composition according to any of preceding claims, **characterized in that** the dichroic dye amount does vary from 1 to 10%, preferably from 4 to 6% by weight of the composition.

14. A composition according to any of the claims 3 to 13, **characterized in that** the surfactant compound(s) represent (s) from 0.5 to 2% by weight, as related to the composition total weight.

15. A composition according to any of preceding claims, **characterized in that** it comprises at least one oligomer or polymer binding agent.

16. A composition according to claim 15, **characterized in that** the binding agent is a polyvinyl alcohol.

17. A composition according to any of the claims 1 to 14, **characterized in that** it comprises a relay compound in a monomer, oligomer or polymer form to cause the dichroic dye orientation.

18. A composition according to claim 17, **characterized in that** the relay compound is a liquid crystal.

19. A method for processing an optical product, at least one face of which is covered with a light-polarizing, solid coating layer, said method comprising the following steps:

    a) forming a liquid film of a polarizing, solid coating composition comprising magnetic particles that are suspended in a solvent onto the surface of an optical product that is either bare or covered with one or more functional coating layer(s);
    b) exposing said optical product covered with the composition liquid film, such as obtained at the end of step a), to the action of a magnetic field, and
    c) performing the drying of said film,

    **characterized in that** at least one dichroic dye compound is present in said liquid film during step a) or applied onto the surface of said film after step c), preferably is present in said film during step a).

20. A method according to claim 19, **characterized in that** the drying of said film of step c) is effected at least partly simultaneously to the action of said magnetic field.

21. A method according to claim 19 or claim 20, **characterized in that** it comprises an additional d) step for fixing the light-polarizing, solid coating layer.

22. A method according to any of the claims 19 to 21, **characterized in that** it comprises prior to step a) an acidic or a basic pre-treating step for the optical glass surface.

23. A method according to any of the claims 19 to 22, **characterized in that** it comprises after step d), or after step c) when step d) is omitted, one or more additional step(s) for coating the polarizing, solid coating layer with one or more additional coating layer(s).

24. A light-polarizing optical product, at least one of the surfaces of which is coated with a light-polarizing, solid coating layer comprising the combination made of (i) particles from a magnetic material and (ii) a dichroic dye compound.

25. A light-polarizing optical product according to claim 24, **characterized in that** the polarizing, solid coating layer is obtained from a composition according to any of the claims 1 to 18.

**Patentansprüche**

1. Zusammensetzung für eine feste lichtpolarisierende Beschichtung umfassend, in Suspension in einem Lösungsmittel, (i) Partikel aus mindestens einem magnetischen Material, **dadurch gekennzeichnet, dass** sie (ii) mindestens eine dichroitische Farbstoffverbindung umfasst.

2. Zusammensetzung nach Anspruch 1, **dadurch gekennzeichnet, dass** das Lösungsmittel eine wässrige Lösung ist.

3. Zusammensetzung nach Anspruch 1 oder 2, **dadurch gekennzeichnet, dass** sie mindestens ein Tensid umfasst.

4. Zusammensetzung nach einem der vorhergehenden Ansprüche, **dadurch gekennzeichnet, dass** das magnetische Material ein ferromagnetisches oder ferrimagnetisches Material ist.

5. Zusammensetzung nach Anspruch 1, **dadurch gekennzeichnet, dass** die Partikel aus ferrimagnetischem Material ausgewählt sind unter den Partikeln gebildet aus $Fe_2O_3$ oder den Partikeln gebildet aus einem Material der Formel $MO.Fe_2O_3$, in weicher M Zn, Cd, Fe, Ni, Cu, Co, Mg, Cr und Mn bedeutet

6. Zusammensetzung nach einem der vorhergehenden Ansprüche, **dadurch gekennzeichnet, dass** die dichroitische (n) Farbstoffverbindung(en) ausgewählt ist (sind) unter dem Dinatriumsalz der 4-Amino-3-((4'-((1-hydroxy-4-sulfo-2-naphthalenyl)azo)-3,3'-dimethoxy(1,1'-biphenyl)-4-yl)azo)-1-naphtalensulfonsäure, $C_{32}H_{30}N_5NaO_8S_2$ [Dircet Violet 51], das $C_{34}H_{28}N_6O_{16}S_4$.4Na [Chicago Skye Blue 6B], $C_{22}H_{16}N_4O$-4-[4-(phenylazo)-1-naphtylazo]phenol [Disperse Orange 13].

**7.** Zusammensetzung nach einem der vorhergehenden Ansprüche, **dadurch gekennzeichnet, dass** sie 2 bis 4 verschiedene dichroitische Farbstoffverbindungen umfasst.

**8.** Zusammensetzung nach einem der Ansprüche 3 bis 7, **dadurch gekennzeichnet, dass** die oberflächenaktive(n) Verbindung(en) ausgewählt ist (sind) unter dem EFKA 3034 und dem Nonylphenolethoxylat (NPE).

**9.** Zusammensetzung nach einem der vorhergehenden Ansprüche, **dadurch gekennzeichnet, dass** das Gewichtsverhältnis, in der Trockensubstanz, magnetische Partikel/dichroitische(r) Farbstoff(e) 1/1 bis 1/100, vorzugsweise 1/5 bis 1/50 and besser 1/7 bis 1/33 ist.

**10.** Zusammensetzung nach einem der vorhergehenden Ansprüche, **dadurch gekennzeichnet, dass** die Menge an Partikeln aus mindestens einem magnetischem Material von 0,1 bis 1%, vorzugsweise von 0,3 bis 0,8% im Verhältnis zum Gewicht der Zusammensetzung variiert.

**11.** Zusammensetzung nach einem der vorhergehenden Ansprüche, **dadurch gekennzeichnet, dass** die Partikel aus mindestens einem magnetischen Material aus sphärischen Partikeln bestehen.

**12.** Zusammensetzung nach einem der vorhergehenden Ansprüche, **dadurch gekennzeichnet, dass** die Partikel aus mindestens einem magnetischen Material eine mittlere Partikelgröße von 0,001 $\mu$m bis 0,3 $\mu$m, vorzugsweise von 0,003 $\mu$m bis 0,2 $\mu$m, bestenfalls von 0,005 $\mu$m bis 0,1 $\mu$m haben.

**13.** Zusammensetzung nach einem der vorhergehenden Ansprüche, **dadurch gekennzeichnet, dass** die Menge des oder der dichroitischen Farbstoffe(s) von 1 bis 10 Gew.-% vorzugsweise von 4 bis 6 der Zusammensetzung variiert.

**14.** Zusammensetzung nach einem der Ansprüche 3 bis 13, **dadurch gekennzeichnet, dass** die oberflächeiiaktive(n) Verbindung(en) mit 0,5 bis 2 Gew.-% repräsentiert sind, im Verhältnis zum Gesamtgewicht der Zusammensetzung.

**15.** Zusammensetzung nach einem der vorhergehenden Ansprüche, **dadurch gekennzeichnet, dass** sie mindestens einen oligomeren oder polymeren Binder umfasst.

**16.** Zusammensetzung nach Anspruch 15, **dadurch gekennzeichnet, dass** der Binder Polyvinylalkohol ist.

**17.** Zusammensetzung nach einem der Ansprüche 1 bis 14, **dadurch gekennzeichnet, dass** sie eine Mittlerverbindung bei monomerer, oligomerer oder polymerer Form umfasst, um die Orientierung der dichroitischen Farbstoffe zu provozieren.

**18.** Zusammensetzung nach Anspruch 17, **dadurch** gekenntzeichnet, dass die Mittierverbindung ein flüssiger Kristall ist.

**19.** Verfahren zur Herstellung eines optischen Artikels, von dem mindestens die eine der Seiten beschichtet ist mit einer Schicht der festen lichtpolarisierenden Beschichtung, besagtes Verfahren umfassend die folgenden Schritte:

a) Bilden eines flüssigen Films einer Zusammensetzung für eine feste polarisierende Beschichtung umfassend magnetische Partikel in Suspension in einem Lösungsmittel auf der Oberfläche eines nackten oder mit einer oder mehreren Schichten der funktionellen Beschichtung beschichteten optischen Artikels;
b) Exponieren des mit dem flüssigen Film der Zusammensetzung beschichteten optischen Artikels, wie zum Beispiel am Ende des Schrittes a), der Wirkung eines magnetischen Feldes und
c) Durchführen der Trocknung von besagtem Film, **dadurch gekennzeichnet, dass** sich mindestens eine dichroitische Farbstoffverbindung in besagtem flüssigen Film während des Schrittes a) befindet oder auf der Oberfläche des besagten Films nach dem Schritt c) abgelagert wird, vorzugsweise befindet sie sich in besagtem Film während des Schrittes a).

**20.** Verfahren nach Anspruch 19, **dadurch gekennzeichnet, dass** die Trocknung von besagtem Film des Schrittes c) mindestens teilweise gleichzeitig mit der Wirkung des besagten magnetischen Feldes erfolgt.

**21.** Verfahren nach Anspruch 19 oder 20, **dadurch gekennzeichnet, dass** es einen zusätzlichen Schritt d) der Fixierung der Schicht der festen lichtpolarisierenden Beschichtung umfasst.

**22.** Verfahren nach einem der Ansprüche 19 bis 21, **dadurch gekennzeichnet, dass** es, vor dem Schritt a), einen Schritt der sauren oder basischen Vorbehandlung der Oberfläche des optischen Glases umfasst.

23. Verfahren nach einem der Ansprüche 19 bis 22, **dadurch gekennzeichnet, dass** es, nach dem Schritt d) oder nach dem Schritt c), wenn der Schritt d) ausgelassen wird, einen oder mehrere zusätzliche Schritte der Beschichtung der Schicht der festen polarisierenden Beschichtung mit einer oder mehreren zusätzlichen Schichten der Beschichtung umfasst.

24. Lichtpolarisierender optischer Artikel, von dem mindestens die eine seiner Oberflächen mit einer Schicht einer festen lichtpolarisierenden Beschichtung umfassend die Verbindung (i) von Partikeln aus einem magnetischen Material und (ii) aus einer dichroitischen Farbstoffverbindung überzogen ist.

25. Polarisierender optischer Artikel nach Anspruch 24, **dadurch gekennzeichnet, dass** die Schicht der festen polarisierenden Beschichtung aus einer Zusammensetzung nach einem der Ansprüche 1 bis 18 erhalten wird.

## FIGURE 1

Figure 1A parallèle

Figure 1B perpendiculaire

## FIGURE 2

Figure 2 A parallèle

Figure 2B perpendiculaire

FIGURE 3

**Spectre CR**

FIGURE 4

**Spectre CR**

FIGURE 5

FIGURE 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5882774 A
- US 5943156 A
- WO 9013052 A
- US 6245399 B